# EUROPÄISCHE PATENTSCHRIFT

(11) **EP 1 214 587 B1**
(45) Veröffentlichungstag und Bekanntmachung des Hinweises auf die Patenterteilung: **13.04.2005**
(21) Anmeldenummer: 00971254.8
(22) Anmeldetag: 21.09.2000
(51) Int. Cl.: G01N 29/02

(54) **VORRICHTUNG ZUM MESSEN DER SPEZIFISCHEN DICHTE EINES GASFÖRMIGEN ODER FLÜSSIGEN MEDIUMS**
DEVICE FOR MEASURING THE SPECIFIC DENSITY OF A GASEOUS OR LIQUID MEDIUM
DISPOSITIF POUR MESURER LA DENSITE SPECIFIQUE D'UN MILIEU GAZEUX OU LIQUIDE

(30) Priorität: 23.09.1999 DE 29916826 U
(43) Veröffentlichungstag der Anmeldung: 19.06.2002
(73) Patentinhaber: SIEMENS AKTIENGESELLSCHAFT, 80333 München (DE)
(72) Erfinder: FIEBELKORN, Klaus, 76872 Minfeld (DE); PÜTTMER, Alf, 76135 Karlsruhe (DE)
(86) Internationale Anmeldenummer: PCT/DE2000/003294
(87) Internationale Veröffentlichungsnummer: WO 2001/022039

(56) Entgegenhaltungen:
- EP-A- 0 527 651
- DE-C- 19 535 848
- PATENT ABSTRACTS OF JAPAN vol. 014, no. 559 (C-0787), 12. Dezember 1990 (1990-12-12) & JP 02 239851 A (FUJI PHOTO OPTICAL CO LTD), 21. September 1990 (1990-09-21)

## Beschreibung

Die Erfindung betrifft eine Vorrichtung zum Messen der spezifischen Dichte eines gasförmigen oder flüssigen Mediums nach dem Oberbegriff des Anspruchs 1.

Aus der DE 195 35 848 C1 ist eine Vorrichtung zur Messung der akustischen Impedanz von flüssigen Medien mit einer mehrschichtigen Schallwandleranordnung bekannt. Von einem Schallwandler wird gleichzeitig jeweils ein Schallimpuls in eine erste und eine zweite akustische Vorlaufstrecke eingestrahlt. Die an einer Grenzschicht zwischen der ersten Vorlaufstrecke und einem zu untersuchenden Medium reflektierten Schallwellen werden ebenso wie die an einer Grenzschicht zwischen der zweiten Vorlaufstrecke und einem Referenzmedium reflektierten Schallwellen durch den Schallwandler empfangen und in einer Auswerteeinrichtung ausgewertet. Aus dem Verhältnis der Amplituden der beiden empfangenen Schallimpulse kann auf die akustische Impedanz des Meßmediums oder auf dessen spezifische Dichte geschlossen werden. Die beiden akustischen Vorlaufstrecken haben im wesentlichen eine zylinderförmige Gestalt. Ein scheibenförmiger Schwallwandler gleichen Durchmessers ist zwischen den beiden Grundflächen der zylinderförmigen Vorlaufstrecken angeordnet. Nachteilig bei der bekannten Vorrichtung ist, daß sogenannte Beugungswellen, die im Randbereich des scheibenförmigen Schallwandlers entstehen, Störechos in den Vorlaufstrecken verursachen, die sich dem Meßsignal überlagern und den Signal/Rausch-Abstand vermindern. Zudem werden durch die Beugungswellen auf den Grundflächen der Vorlaufstrecken Oberflächenwellen angeregt, die ebenfalls die Genauigkeit der Messung begrenzen. Ein weiterer Nachteil der bekannten Vorrichtung ist darin zu sehen, daß der Schallwandler, der als eine scheibenförmige Piezokeramik ausgeführt ist, neben den für die Messung gewünschten Dickenschwingungen auch ungehindert in Radialmodus schwingen kann.

Der Erfindung liegt die Aufgabe zugrunde, eine Vorrichtung zum Messen der spezifischen Dichte eines gasförmigen oder flüssigen Mediums mit einer verbesserten Meßgenauigkeit zu schaffen.

Zur Lösung dieser Aufgabe weist die Vorrichtung der eingangs genannten Art die im Anspruch 1 angegebenen Merkmale auf. In den Unteransprüchen sind vorteilhafte Weiterbildungen der Erfindung beschrieben.

Die Erfindung hat den Vorteil, daß aufgrund des geringeren Durchmessers des Schallwandlers gegenüber dem Durchmesser der zylinderförmigen Vorlaufstrecken durch die Beugungswellen weniger oder schwächere Störechos in den Vorlaufstrecken erzeugt und die Stärke der Oberflächenwellen auf den Grundflächen der Vorlaufstrecken vermindert werden. Durch den Ring, in welchen der Schallwandler eingesetzt ist, werden zudem Radialschwingungen des Schallwandlers gedämpft. Ein weiterer Vorteil ist der durch den Ring erzielte robuste Aufbau der Vorrichtung, da die zwischen den Vorlaufstrecken wirkenden Kräfte vom Ring aufgenommen werden können und nicht die Grenzflächen zwischen Schallwandler und Vorlaufstrecken belasten.

Der Außendurchmesser des Schallwandlers wird vorzugsweise kleiner als drei Viertel und größer als ein Viertel des Durchmessers der Grundflächen der Vorlaufstrecken gewählt. Diese Bemessung hat den Vorteil, daß eine im wesentlichen ebene Wellenfront vom Schallwandler in die Vorlaufstrecken abgestrahlt wird und zugleich eine für die Messung ausreichende Schallenergie erzeugbar ist.

Da der Schallwandler formschlüssig zwischen den beiden Vorlaufstrecken in den Ring eingebettet ist, sind etwa gleiche thermische Ausdehnungskoeffizienten der verwendeten Materialien von besonderer Bedeutung. Nur wenn diese Bedingung erfüllt ist, werden in der Vorrichtung bei schwankenden Temperaturen geringe thermische Spannungen erzeugt und die erforderliche Langzeitstabilität der akustischen Kopplung der Komponenten erreicht. Vorteilhaft ist daher eine Ausführung des Schallwandlers als Piezokeramik und der beiden Vorlaufstrecken sowie des Rings aus einem Quarzglas oder aus Zerodur.

Die Elektroden des Schallwandlers können in einfacher Weise durch eine Bedampfung der dem Schallwandler zugewandten Grundflächen der Vorlaufstrecken hergestellt werden. Das hat den Vorteil, daß die Elektroden bis auf die Mantelflächen der Vorlaufstrecken herausführbar und dort einfach kontaktierbar sind.

Alternativ dazu kann zur Klebung der dem Schallwandler zugewandten Grundflächen der Vorlaufstrecken ein elektrisch leitender Kleber, insbesondere ein elektrisch leitender Epoxidharzkleber, eingesetzt werden. Damit entfällt der Herstellungsschritt der Bedampfung der Vorlaufstrecken, da bereits der Kleber die Funktion der Elektroden des Schallwandlers übernehmen kann. Auch in diesem Fall sind die Elektroden einfach bis auf die Mantelflächen herausführbar und es ergibt sich insgesamt eine kostengünstige Herstellung der Vorrichtung.

Ein ebenfalls mit geringem Aufwand verbundenes Verfahren zur Herstellung der Elektroden ist die Auflage einer Metallfolie zur Metallisierung der jeweiligen Grundflächen.

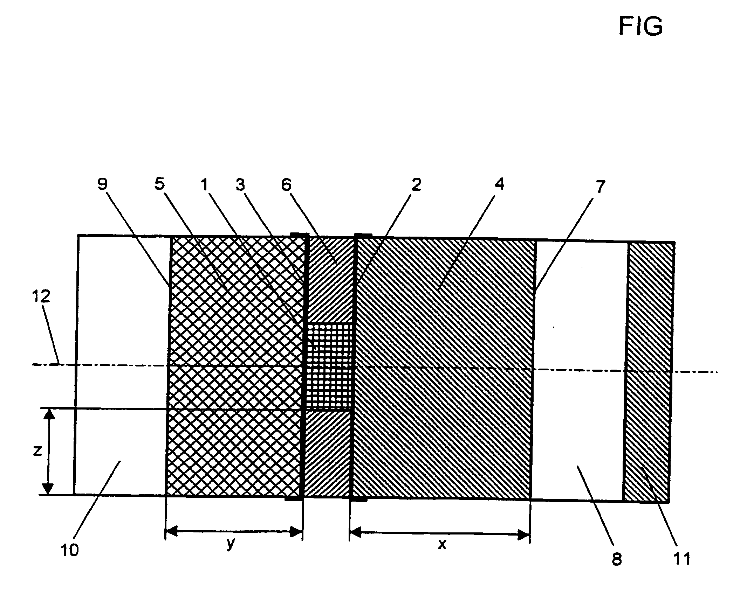

Anhand der Zeichnung, in der ein Ausführungsbeispiel der Erfindung dargestellt ist, werden im folgenden die Erfindung sowie Ausgestaltungen und Vorteile näher erläutert.

Ein scheibenförmiger Schallwandler 1, der aus einer Piezokeramik besteht, auf deren Grundflächen zwei Elektroden 2 und 3 angeordnet sind, befindet sich zwischen einer ersten Vorlaufstrecke 4 und einer zweiten Vorlaufstrecke 5. Die beiden Vorlaufstrecken 4 und 5 bestehen aus Quarzglas, sind zylinderförmig und mit ihren Grundflächen, welche die aufgedampften Metallelektroden 2 bzw. 3 tragen, durch einen Epoxidharzkleber fest mit den beiden Grundflächen eines hohlzylinderförmigen Rings 6 verklebt, welcher den Schallwandler 1 formschlüssig umgibt und mit dessen Mantelfläche ebenfalls verklebt ist. Eine von dem Schallwandler 1 abgewandte Grundfläche 7 der Vorlaufstrecke 4 bildet eine Grenzschicht zu einem zu messenden Medium 8, an welcher ein von dem Schallwandler 1 ausgesendeter Schallimpuls in Abhängigkeit der akustischen Impedanzen der ersten Vorlaufstrecke 4 und des Meßmediums 8 reflektiert wird. Eine weitere Grenzfläche 9 wird durch die von dem Schallwandler 1 abgewandte Grundfläche der zweiten Vorlaufstrecke 5 und ein Referenzmedium 10 gebildet. In diesem Ausführungsbeispiel dient als Referenzmedium 10 die Umgebungsluft. Ein das Meßmedium 8 umschließender Raum wird von einer Wand 11 begrenzt, an welcher ein zusätzlicher Schallwandler, der als Empfänger betrieben wird, angeordnet werden kann.

An die Elektroden 2 und 3, die bis auf die Mantelflächen der ersten Vorlaufstrecke 4 bzw. der zweiten Vorlaufstrecke 5 geführt sind, kann in einfacher Weise eine Auswerteeinrichtung angeschlossen werden, die in der Zeichnung der Übersichtlichkeit wegen nicht dargestellt ist. Durch die Auswerteeinrichtung werden elektrische Impulse zur Anregung des Schallwandlers 1 in die Elektroden 2 und 3 eingespeist und durch die reflektierten Schallwellen im Schallwandler 1 erzeugte elektrische Signale empfangen und ausgewertet.

Die in der Zeichnung dargestellten Teile sind bezüglich einer Achse 12 rotationssymmetrisch aufgebaut. Die beiden Vorlaufstrecken 4 und 5, sowie der Ring 6 bestehen aus Quarzglas und somit einem Material, das etwa denselben thermischen Ausdehnungskoeffizienten wie die Piezokeramik des Schallwandlers 1 aufweist, so daß bei Temperaturänderungen allenfalls geringe thermische Spannungen in der Vorrichtung auftreten. Dadurch ist eine gute Langzeitstabilität der Klebungen gewährleistet. Zwischen den beiden Vorlaufstrecken 4 und 5 wirkende Kräfte werden größtenteils vom Ring 6 aufgenommen und wirken somit nur wenig auf den Schallwandler 1. Insgesamt wird ein robuster Aufbau der Vorrichtung erreicht.

Die Höhe x der ersten Vorlaufstrecke 4 und die Höhe y der zweiten Vorlaufstrecke 5 sind derart unterschiedlich festzulegen, daß ein zeitliches Fenster zur Auswertung der durch die reflektierten Schallwellen im Schallwandler 1 erzeugten Signale so gelegt werden kann, daß im Fenster möglichst wenig Störsignale liegen und eine unabhängige Messung der an der Grenzfläche 7 und der an der Grenzfläche 9 reflektierten Schallwelle ermöglicht wird. Die Dicke z der Wandung des hohlzylinderförmigen Rings 6 wird vorzugsweise so gewählt, daß die von den Grenzflächen 7 und 9 verursachten Signale von einem radialen Störsignal, das an der äußeren Mantelfläche des Rings 6 entsteht, durch entsprechende Festlegung des Auswertefenster unterscheidbar sind.

Alternativ zu dem dargestellten Ausführungsbeispiel können die Elektroden 2 und 3 durch Auflage einer Metallfolie oder durch einen leitfähigen Epoxidharzkleber gebildet werden, so daß ein Aufdampfen einer Metallisierung nicht erforderlich ist.

## Patentansprüche

1. Vorrichtung zum Messen der spezifischen Dichte eines gasförmigen oder flüssigen Mediums mit einer nach zwei Seiten wirksamen Schallwandleranordnung (1) zum Aussenden und Empfangen von Schallsignalen, mit einer Einrichtung zur Auswertung der in der Schallwandleranordnung (1) erzeugten elektrischen Signale und mit zwei im wesentlichen zylinderförmigen akustischen Vorlaufstrecken (4, 5) mit jeweils bekannter akustischer Impedanz, wobei die eine Vorlaufstrecke (4) auf der einen Seite des Schallwandlers (1) angeordnet ist und auf ihrer dem Schallwandler (1) abgewandten Grundfläche eine Grenzfläche (7) zu dem zu messenden Medium (8) aufweist und wobei die andere Vorlaufstrecke (5) auf der anderen Seite des Schallwandlers (1) angeordnet ist und auf ihrer dem Schallwandler (1) abgewandten Grundfläche eine Grenzfläche (9) zu einem Referenzmedium (10) aufweist,
**dadurch gekennzeichnet,**
**daß** der Schallwandler (1) einen kleineren Durchmesser aufweist als die Grundflächen der Vorlaufstrecken (4, 5)und in einen im wesentlichen hohlzylinderförmigen Ring (6) eingesetzt ist, dessen Innendurchmesser an den Außendurchmesser des Schallwandlers (1) und dessen Außendurchmesser an den Durchmesser der Grundflächen der Vorlaufstrecken (4, 5) angepaßt sind.

2. Vorrichtung nach Anspruch 1,
**dadurch gekennzeichnet,**
**daß** der Außendurchmesser des Schallwandlers (1) kleiner als drei Viertel und größer als ein Viertel des Durchmessers der Grundflächen der Vorlaufstrecken (4, 5) ist.

3. Vorrichtung nach Anspruch 1 oder 2,
**dadurch gekennzeichnet,**
**daß** der Schallwandler (1) als Piezokeramik und die beiden Vorlaufstrecken (4, 5) sowie der Ring (6) aus einem Quarzglas oder aus Zerodur ausgeführt und miteinander verklebt sind.

4. Vorrichtung nach Anspruch 3,
**dadurch gekennzeichnet,**
**daß** die dem Schallwandler (1) zugewandten Grundflächen der Vorlaufstrecken (4, 5) mit einem Metall bedampft sind.

5. Vorrichtung nach Anspruch 3,
**dadurch gekennzeichnet,**
**daß** zur Klebung der dem Schallwandler zugewandten Grundflächen der Vorlaufstrecken (4, 5) ein elektrisch leitender Kleber, insbesondere ein Epoxidharzkleber, verwendet wird.

6. Vorrichtung nach Anspruch 3,
**dadurch gekennzeichnet, daß** die dem Schallwandler (1) zugewandten Grundflächen der Vorlaufstrecken (4, 5) durch Auflage einer Metallfolie metallisiert sind.

## Claims

1. Device for measuring the specific density of a gaseous or liquid medium with an acoustic transducer arrangement (1) which is active on two sides for emitting and receiving acoustic signals, with a device for evaluating the electrical signals produced in the acoustic transducer arrangement (1) and with two substantially cylindrical acoustic delay paths (4, 5), each with a known acoustic impedance, one delay path (4) being arranged on one side of the acoustic transducer (1) and having on its base area facing away from the acoustic transducer (1) a boundary surface (7) with respect to the medium (8) to be measured, and the other delay path (5) being arranged on the other side of the acoustic transducer (1) and having on its base area facing away from the acoustic transducer (1) a boundary surface (9) with respect to a reference medium (10), **characterized in that** the acoustic transducer (1) has a smaller diameter than the base areas of the delay paths (4, 5) and is inserted in a substantially hollow-cylindrical ring (6), the inside diameter of which is adapted to the outside diameter of the acoustic transducer (1) and the outside diameter of which is adapted to the diameter of the base areas of the delay paths (4, 5).

2. Device according to Claim 1, **characterized in that** the outside diameter of the acoustic transducer (1) is less than three quarters and greater than one quarter of the diameter of the base areas of the delay paths (4, 5).

3. Device according to Claim 1 or 2, **characterized in that** the acoustic transducer (1) takes the form of a piezo-ceramic element and the two delay paths (4, 5) and the ring (6) are formed from a quartz glass or from Zerodur and they are adhesively bonded to one another.

4. Device according to Claim 3, **characterized in that** the base areas of the delay paths (4, 5) facing the acoustic transducer (1) are vacuum-coated with a metal.

5. Device according to Claim 3, **characterized in that** an electrically conducting adhesive, in particular an epoxy-resin adhesive, is used for the adhesive bonding of the base areas of the delay paths (4, 5) facing the acoustic transducer.

6. Device according to Claim 3, **characterized in that** the base areas of the delay paths (4, 5) facing the acoustic transducer (1) are metallized by application of a metal foil.

## Revendications

1. Dispositif de mesure de la masse volumique spécifique d'un fluide gazeux ou liquide comprenant un dispositif (1) de transducteur acoustique efficace des deux côtés pour émettre et recevoir des signaux acoustiques, un dispositif d'exploitation des signaux électriques produits dans le dispositif (1) de transducteur acoustique et deux sections (4, 5) de trajet acoustique de forme sensiblement cylindrique ayant, respectivement, une impédance acoustique connue, l'une des sections (4) de trajet étant disposée d'un côté du transducteur (1) acoustique et ayant sur sa surface de base, éloignée du transducteur (1) acoustique, une interface (7) avec le fluide (8) à mesurer et dans lequel l'autre section (5) de trajet est disposée de l'autre côté du transducteur (1) acoustique et a, sur sa surface de base éloignée du transducteur (1) acoustique, une interface (9) avec un milieu (10) de référence, **caractérisé en ce que** le transducteur (1) acoustique a un diamètre plus petit que les surfaces de base des sections (4, 5) de trajet et est inséré dans un anneau (6) de forme sensiblement cylindrique, dont le diamètre intérieur est adapté au diamètre extérieur du transducteur (1) acoustique et dont le diamètre extérieur est adapté au diamètre des surfaces de base des sections (4, 5) de trajet.

2. Dispositif suivant la revendication 1, **caractérisé en ce que** le diamètre extérieur du transducteur (1) acoustique est inférieur aux trois quarts et supérieur au quart du diamètre des surfaces de base des sections (4, 5) de trajet.

3. Dispositif suivant la revendication 1 ou 2, **caractérisé en ce que** le transducteur (1) acoustique est réalisé sous la forme d'une céramique piézoélectrique et les deux sections (4, 5) de trajet, ainsi que l'anneau 6 sont en verre au quartz ou en zérodur et sont collées entre elles.

4. Dispositif suivant la revendication 3, **caractérisé en ce que** les surfaces de base, tournées vers le transducteur (1) acoustique, des sections (4, 5) de trajet sont revêtues en phase vapeur d'un métal.

5. Dispositif suivant la revendication 3, **caractérisé en ce que**, pour coller les surfaces de base, tournées vers le transducteur (1) acoustique, des sections (4, 5) de trajet, il est utilisé une colle conductrice de l'électricité, notamment une colle en résine époxyde.

6. Dispositif suivant la revendication 3, **caractérisé en ce** les surfaces de base, tournées vers le transducteur (1) acoustique, des sections (4, 5) de trajet sont métallisées par application d'une feuille métallique.
